# EUROPEAN PATENT APPLICATION

(11) **EP 4 775 830 A1**
(43) Date of publication of application: **15.07.2026**
(21) Application number: 26151587.8
(22) Date of filing: 13.01.2026
(51) Int. Cl.: F03D 3/02

(54) **WIND POWER GENERATION APPARATUS**

(30) Priority: 13.01.2025 CN 202520074466 U
(71) Applicant: Bitmain Technologies Inc., Beijing 100176 (CN)
(72) Inventor: ZHAN, Ketuan, 100176 Beijing (CN); YIN, Zhenshuo, 100176 Beijing (CN); YANG, Yinchuang, 100176 Beijing (CN); PAN, Gaofei, 100176 Beijing (CN); WANG, Fei, 100176 Beijing (CN)
(74) Representative: Elzaburu S.L.P.

(57) **Abstract**

The present disclosure provides a wind power generation apparatus, including: at least two support platforms, stacked along a first direction; a wind turbine and a support frame, arranged between two adjacent support platforms; where the support frame is connected between the two adjacent support platforms; the wind turbine is detachably connected to one of the two adjacent support platforms, and spaced apart from the support frame and the other of the two adjacent support platforms. In an embodiment of the present disclosure, a difficulty of disassembling the wind turbine in the wind power generation apparatus may be reduced.

## Description

### TECHNICAL FIELD

The disclosure relates to the field of new energy power generation and, in particular, to a wind power generation apparatus.

### BACKGROUND

In related arts, complex support structures and connection structures are generally installed in a wind power generation apparatus to improve the overall structural strength of the wind power generation apparatus. At this point, in a case that maintenance is required for a wind turbine in the wind power generation apparatus, the complex support structures and connection structures will cause adverse impact on the maintenance of the wind turbine, leading to increased maintenance difficulty.

### SUMMARY

To overcome the problem in related arts, the present disclosure provides a wind power generation apparatus to reduce difficulty of disassembling a wind turbine.

According to an embodiment of the present disclosure, a wind power generation apparatus is provided, including:
at least two support platforms, stacked along a first direction;
a wind turbine and a support frame, arranged between two adjacent support platforms;
where the support frame is connected between the two adjacent support platforms;
the wind turbine is detachably connected to one of the two adjacent support platforms, and spaced apart from the support frame and the other of the two adjacent support platforms.

In some embodiments, the wind power generation apparatus includes:
a first connecting component, connected between one of the two adjacent support platforms and the wind turbine;
where, the wind turbine is detachably connected to the first connecting component, and/or the first connecting component is detachably connected to one of the two adjacent support platforms.

In some embodiments, the first connecting component is arranged along a first direction and aligned with a rotating shaft of the wind turbine.

In some embodiments, the first connecting component includes a first connecting end and a second connecting end that are arranged oppositely;
the first connecting end is connected to one of the two adjacent support platforms;
the second connecting end is connected to an electromagnetic braking module at a bottom of the wind turbine through a first flange.

In some embodiments, multiple support frames are provided; the multiple support frames are spaced apart and each connected to edge positions of the two adjacent support platforms.

In some embodiments, each support platform has multiple support edges and a support angle formed by two adjacent support edges;
the two adjacent support platforms have two support edges aligned along the first direction, and two support angles aligned along the first direction;
the two support angles arranged in alignment are connected by one support frame;
   and/or,
the two support edges arranged in alignment are connected by another support frame.

In some embodiments, the support platform is a symmetrical platform with a center of symmetry or an axis of symmetry;
the multiple support frames are symmetrically distributed between the two adjacent support platforms relative to the center of symmetry or the axis of symmetry.

In some embodiments, the first connecting component connecting with the wind turbine in the wind power generation apparatus is arranged at the center of symmetry.

In some embodiments, the support frame has a first support end and a second support end along the first direction;
the first support end is connected to one of the two adjacent support platforms through a second flange;
the second support end is connected to the other of the two adjacent support platforms through a third flange.

In some embodiments, the wind turbine includes:
at least two blades, arranged along the first direction;
a second connecting component, connected between each blade and a rotating shaft of the wind turbine;
a third connecting component, connected between two adjacent blades.

In some embodiments, the second connecting component connected between each blade and the rotating shaft of the wind turbine includes: multiple connecting rods;
a same blade is respectively connected with multiple connecting rods to form multiple connection points; the multiple connection points are evenly distributed on the same blade.

In some embodiments, a length of the blade along the first direction is the same as a length of the rotating shaft along the first direction, and the second connecting component is arranged along a second direction; the second direction is perpendicular to the first direction;
or,
the length of the blade along the first direction and the length of the rotating shaft along the first direction are different, the second connecting component is arranged along a third direction, and an angle between the third direction and the first direction is an acute angle or an obtuse angle.

In some embodiments, multiple wind turbines of the wind power generation apparatus include a first wind turbine located at a first height and a second wind turbine located at a second height, the second height being greater than the first height;
a number of blades of the first wind turbine is greater than that of blades of the second wind turbine.

In the embodiments of the present disclosure, a wind turbine disposed between two adjacent support platforms may be detachably connected to one of support platforms, and spaced apart from the other support platform and a support frame disposed between the two adjacent support platforms. That is to say, there is no connection between the wind turbine and the other support platform, as well as between the wind turbine and the support frame.

At this point, in a process of disassembling the wind turbine disposed between two adjacent support platforms, after the disassembly of a connection between the wind turbine and one of the support platforms is completed, the wind turbine may be successfully disassembled from a position between two adjacent support platforms. In this way, the difficulty of disassembly may be reduced and the disassembly speed may be improved. The convenience of maintenance may be improved when it is necessary to disassemble the wind turbine for maintenance.

It should be understood that the above general description and the subsequent detailed description are only exemplary and explanatory, and cannot limit the present disclosure.

### BRIEF DESCRIPTION OF THE DRAWINGS

The accompanying drawings are incorporated into the specification and constitute a part of the specification, showing embodiments that comply with the present disclosure, and are used to explain the principle of the present disclosure together with the specification.
FIG. 1 is a schematic diagram of a wind power generation apparatus provided by an embodiment of the present disclosure.
FIG. 2 is a schematic diagram of a wind power generation apparatus provided by an embodiment of the present disclosure.
FIG. 3 is a schematic diagram of a wind power generation apparatus provided by an embodiment of the present disclosure.
FIG. 4 is a schematic diagram of a wind power generation apparatus provided by an embodiment of the present disclosure.
FIG. 5 is a schematic diagram of a wind turbine in a wind power generation apparatus provided by an embodiment of the present disclosure.

### Reference signs:

1: support platform; 11: support edge; 12: support angle; 2: wind turbine; 21: rotating shaft; 22: blade; 23: second connecting component; 231: fourth connecting rod; 232: fifth connecting rod; 24: third connecting component; 241: first connecting rod; 242: second connecting rod; 243: third connecting rod; 25: electromagnetic braking module; 26: power generation module; 27: first flange; 28: second flange; 29: third flange; 3: support frame; 31: first support end; 32: second support end; 4: first connecting component; 41: first connecting end; 42: second connecting end; Z: first direction; X: second direction; Y: third direction.

### DESCRIPTION OF THE EMBODIMENTS

The exemplary embodiments will be described in detail here, and examples thereof are shown in the drawings. When the following description refers to the drawings, unless otherwise represented, the same numbers in different drawings represent the same or similar elements. The implementations described in the following exemplary embodiments do not represent all implementations consistent with the present disclosure. On the contrary, they are merely examples of apparatuses consistent with some aspects of the present disclosure as detailed in the appended claims.

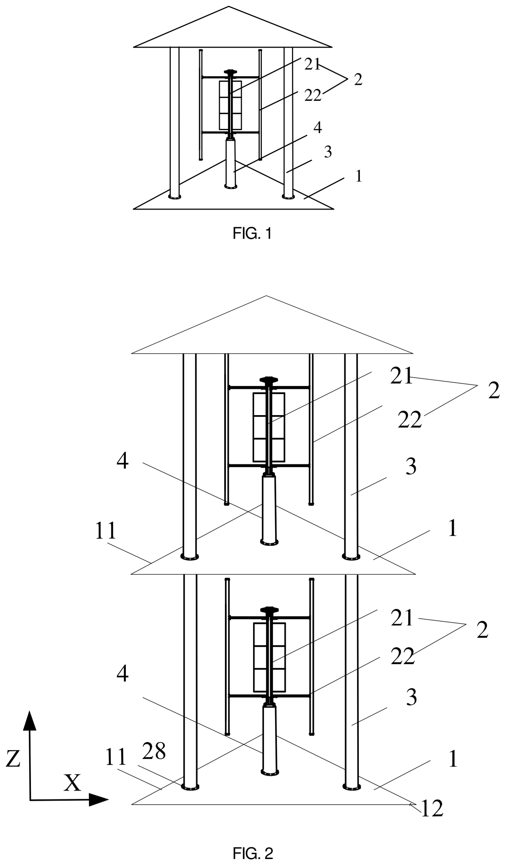

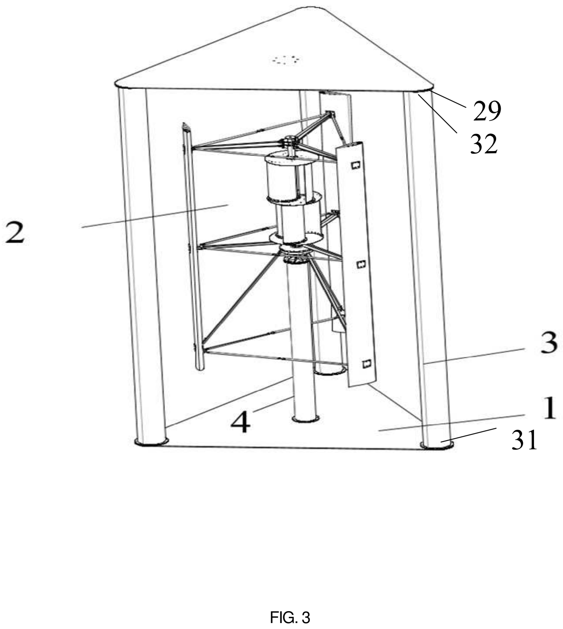

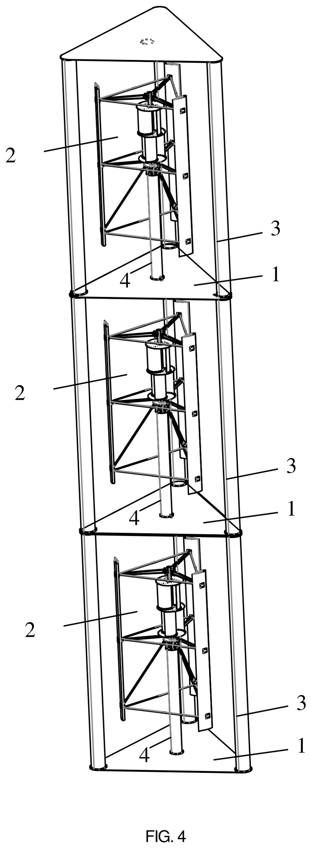

Referring to FIG. 1 to FIG. 4, FIG. 1 to FIG. 4 are schematic structural diagrams of a wind power generation apparatus according to some exemplary embodiments. As shown in FIG. 1 to FIG. 4, the apparatus includes:
at least two support platforms 1 stacked along a first direction Z; and
a wind turbine 2 and a support frame 3 that are disposed between two adjacent support platforms 1;
the support frame 3 being connected between the two adjacent support platforms 1;
the wind turbine 2 being detachably connected to one support platform 1 of the two adjacent support platforms 1 and spaced apart from the support frame 3 and the other support platform 1 of the two adjacent support platforms 1.

In some embodiments, the support platform 1 may be circular, elliptical, polygonal, or irregular in shape. For example, the shape of support platform 1 may be triangle, square, rectangle, or pentagon. Here, each support platform 1 may have the same shape, or there may be at least two support platforms 1 with different shapes.

In some embodiments, each support platform 1 may have the same shape, and two adjacent support platforms 1 may be aligned with each other in the first direction Z.

In some embodiments, the first direction Z may be perpendicular to the ground. A rotating shaft 21 of a wind turbine 2 may be disposed along the first direction Z. At this point, the wind turbine 2 may be a vertical-axis wind turbine 2. Or, the rotating shaft 21 of the wind turbine 2 may be disposed along a second direction X perpendicular to the first direction Z. At this point, the wind turbine 2 can be a horizontal-axis wind turbine 2.

It should be noted that in related arts, with the rapid development of new energy technology in our country, wind power generation as a green energy source has been widely applied. At present, mainstream wind turbines in the market are divided into horizontal-axis wind turbines and vertical-axis wind turbines, where vertical-axis wind turbines are gradually applied to in fields such as intelligent power and public power supply due to their simple structure and easy installation and other characteristics.

Although the application of vertical-axis wind turbines is becoming increasingly widespread, their low wind energy conversion coefficient due to their structure results in lower power generation efficiency and higher cost per unit of power generated. For example, because too large blade structure of an H-type vertical-axis wind turbine cannot be made and a swept area during operation has a linear relationship with a blade length, a power generation area of the vertical-axis wind turbine is generally small. In addition, the wind energy conversion coefficient of the vertical-axis wind turbine is generally lower, so compared with the horizontal-axis wind turbine, overall power generation efficiency of the vertical-axis wind turbine is relatively low, and the energy conversion efficiency of the vertical-axis wind turbine is only about half of that of the horizontal-axis wind turbine. The overall low power generation efficiency will lead to a significant increase in the cost per unit of power generation, as more wind turbines must be manufactured to generate the same amount of power. This increases procurement and processing costs of materials such as towers, support frames, and beams, further resulting in poor economic viability of the vertical-axis wind turbine.

The development of the vertical-axis wind turbine requires greater emphasis on high efficiency and low cost. At present, related research on the vertical-axis wind turbine mainly focuses on how to make a starting wind speed of a single wind turbine lower and the power generation efficiency higher. For example, mechanical parameters such as blade number, a height and a rotor diameter of a wind turbine may be adjusted to improve the power generation efficiency of a single vertical-axis wind turbine. For example, the height of the wind turbine may be adjusted through a lifting structure to improve wind energy utilization efficiency of the wind turbine. However, only the power generation efficiency of the single vertical-axis wind turbine has been improved in related arts, and there is still a problem of high cost when multiple vertical-axis wind turbines are used for power generation.

Based on this, in some embodiments, a first number of support platforms 1 may be stacked along the first direction Z, and a vertical-axis wind turbine may be disposed between two adjacent support platforms 1. The first number is greater than or equal to 3. That is to say, the wind power generation apparatus may include at least two wind turbines 2 stacked along the first direction Z, and different wind turbines 2 are connected to different support platforms 1 respectively.

It should be noted that in a case that the wind turbine 2 is a vertical-axis wind turbine, at least two wind turbines 2 may be stacked along the first direction Z to form a steamer-style wind turbine structure with a shared support platform 1 in the first direction Z. At this point, on the one hand, compared to the manner of using the single vertical-axis wind turbine for power generation in the related art, which results in low power generation, at least two wind turbines 2 may be used jointly to generate power in the embodiments of the present disclosure, thereby improving the power generation efficiency of the wind power generation apparatus. Moreover, each wind turbine 2 is stacked vertically, which may increase an installation height of the wind turbines, so that the wind turbine can receive a better wind speed condition at higher positions than a single vertical-axis wind turbine. Under the better wind speed condition, the power generation of the wind turbines increases. On the other hand, compared to the related arts where separate support structures are required for the wind turbines 2 at each height in the case that the wind turbines 2 are disposed at different heights, multiple support platforms 1 stacked may be shared in the embodiment of the present disclosure to provide the wind turbines 2 at different heights, thereby sharing the manufacturing cost of structural components such as support platforms and support frames, effectively controlling the cost of building a single wind turbine and reducing the cost of setting up wind turbines 2 with different heights.

In some embodiments, the support frame 3 may be a support rod, a support plate, or a support column.

In some embodiments, the width of the support frame 3 may be positively correlated with the number of support platforms 1 and/or the number of wind turbines 2. In this way, as there are more support platforms 1 stacked in the first direction Z, wider support frame 3 may be used to provide stronger support force, improve support stability, and enhance the overall strength of the support structure.

Exemplarily, the support frame 3 may be a tower, and a diameter of the tower is positively correlated with the number of support platforms 1 and/or the number of wind turbines 2. It should be noted that in the wind power generation apparatus of the present disclosure, the number of support platforms 1 and/or the number of wind turbines 2 may be increased in the first direction Z through flange connection structures. If the number of expanded support platforms 1 and/or wind turbines 2 is relatively large, the overall structural strength may be improved by increasing the diameter of the support tower.

In some embodiments, the support frame 3 may be disposed along the first direction Z. At this point, the direction of arranging the support frame 3 is the same as the direction of stacking the support platform 1, so that the support platform 1 stacked above may be provided with support force through a vertical support manner. Or, the support frame 3 may be disposed along a fourth direction, and an angle between the fourth direction and the first direction Z is an acute angle or an obtuse angle. At this point, the support frame 3 between two adjacent support platforms 1 may provide the support force to the support platform 1 stacked above it through diagonal support.

In an embodiment, multiple support frames 3 are disposed between two adjacent support platforms 1, and multiple support frames 3 are spaced apart from each other and surround the wind turbine 2 disposed between two adjacent support platforms 1. In this way, a stable support space may be provided for the wind turbine 2 located within the enclosure of multiple support frames 3.

In an embodiment, a spacing distance between the support frame 3 and the wind turbine 2, which are located between two adjacent support platforms 1, is greater than a predetermined distance. In this way, a sufficient gap may be reserved between two adjacent support platforms 1 for air flow to pass through, thereby providing wind energy for the wind turbine 2 to generate power.

In some embodiments, the wind turbine 2 and the support platform 1 may be connected by threads. For example, the wind turbine 2 and the support platform 1 may be connected through a flange.

In some embodiments, the support frame 3 may be fixedly connected between two adjacent support platforms 1. For example, the support frame 3 may be welded between two adjacent support platforms 1. Or, the support frame 3 may be detachably connected between two adjacent support platforms 1. For example, the support frame 3 may be threadedly connected between two adjacent support platforms 1.

In the embodiment of the present disclosure, the wind turbine 2 disposed between two adjacent support platforms 1 may be detachably connected to one of the support platforms 1, and spaced apart from the other support platform 1 and the support frame 3 disposed between the two adjacent support platforms 1. That is to say, there is no connection between the wind turbine 2 and the other support platform 1, as well as between the wind turbine 2 and the support frame 3.

At this point, in a process of disassembling the wind turbine 2 disposed between two adjacent support platforms 1, after the disassembly of connection between the wind turbine 2 and one of the support platforms 1 is completed, the wind turbine 2 may be successfully disassembled from a position between two adjacent support platforms 1. In this way, the difficulty of disassembly may be reduced and the disassembly speed may be improved. The convenience of maintenance may be improved when it is necessary to disassemble the wind turbine 2 for maintenance.

In some embodiments, referring to FIG. 1 to FIG. 4, the wind power generation apparatus includes:
a first connecting component 4 connected between one of two adjacent support platforms 1 and the wind turbine 2;
where, the wind turbine 2 is detachably connected to the first connecting component 4, and/or, the first connecting component 4 is detachably connected to one of two adjacent support platforms 1.

In some embodiments, the first connecting component 4 may be a connecting rod, a connecting plate, or a connecting column. Exemplarily, the first connecting component 4 may be a wind turbine column.

In the embodiment of the present disclosure, the wind turbine 2 may be disassembled from two adjacent support platforms 1 by disassembling the wind turbine 2 from the first connecting component 4 and/or disassembling the first connecting component 4 from one of two adjacent support platforms 1. In this way, the flexibility of disassembling the wind turbine 2 may be improved.

In some embodiments, referring to FIG. 1 to FIG. 4, the first connecting component 4 is disposed along the first direction Z and aligned with the rotating shaft 21 of the wind turbine 2.

In some embodiments, the first connecting component 4 is disposed along the first direction Z, and a central axis of the first connecting component 4 is aligned with a central axis of the rotating shaft 21.

In the embodiment of the present disclosure, the first connecting component 4 is disposed along the first direction Z and aligned with the rotating shaft 21 of the wind turbine 2, so as to provide stable support force for the rotating shaft 21 of the wind turbine 2 in the first direction Z through the first connecting component 4, and improve connection stability of the wind turbine 2.

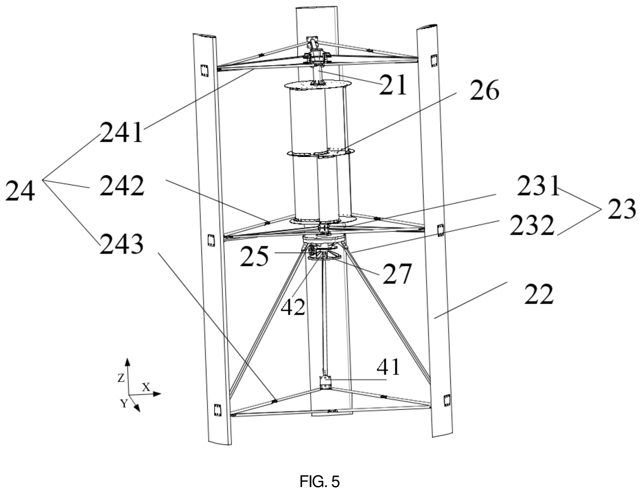

In some embodiments, referring to FIG. 5, the first connecting component 4 includes a first connecting end 41 and a second connecting end 42 that are disposed oppositely;
the first connecting end 41 is connected to one of two adjacent support platforms 1;
the second connecting end 42 is connected to an electromagnetic braking module 25 at a bottom of a wind turbine 2 through a first flange 27.

In some embodiments, the electromagnetic braking module 25 is connected between the second connecting end 42 and the rotating shaft 21 of the wind turbine 2. The electromagnetic braking module 25 is used to apply to the rotating shaft 21 a frictional force opposite to a rotational direction of the rotating shaft 21 when a rotational speed of the rotating shaft 21 in the rotational direction is greater than a speed threshold.

In an embodiment, each wind turbine 2 is separately connected to a control module, which is used to detect at least environmental parameters of an environment in which the wind turbine 2 is located and/or state parameters of the wind turbine 2. The control module is further used to adjust operating parameters of the wind turbine 2 based on detected environmental parameters and/or state parameters.

In an embodiment, the first connecting component 4 is internally hollow, and the electromagnetic braking module 25 of the wind turbine 2 is connected to the control module disposed outside the wind turbine 2 through a first line disposed inside the first connecting component 4. Under a control signal output by the control module, the electromagnetic braking module 25 applies to the rotating shaft 21 a frictional force opposite to its rotational direction. The control module is used to detect the rotational speed of the rotating shaft 21 and output the control signal to the electromagnetic braking module 25 when the rotational speed of the rotating shaft 21 is greater than the speed threshold.

In the embodiment of the present disclosure, on the one hand, the electromagnetic braking module 25 at the bottom of the wind turbine 2 and the second connecting end 42 of the first connecting component 4 may be detachably connected through the first flange 27, thereby facilitating the disassembly of the wind turbine 2. On the other hand, emergency braking may be performed by the electromagnetic braking module 25 in the wind turbine 2 in case of the stall of the wind turbine 2, thereby improving the safety of the wind turbine 2.

In some embodiments, there are multiple support frames 3; these multiple support frames 3 are spaced apart from each other and connected to edge positions of two adjacent support platforms 1.

In an embodiment, multiple support frames 3 are evenly distributed between two adjacent support platforms 1. In this way, uniform support force may be provided to the support platform 1 stacked above the support frames 3 through the support frames 3, improving the support stability.

In the embodiment of the present disclosure, since multiple support frames 3 are spaced apart from each other and each connected to the edge positions of two adjacent support platforms 1, sufficient gaps may be reserved between two adjacent support platforms 1 for air flow to pass through, so that blades 22 of the wind turbine 2 disposed between two adjacent support platforms 1 can rotate under action of air flow, thereby converting wind energy into electrical energy.

In some embodiments, each support platform 1 has multiple support edges 11 and support angles 12 formed by two adjacent support edges 11;
two adjacent support platforms 1 have two support edges 11 that are aligned along a first direction Z, as well as two support angles 12 that are aligned along the first direction Z;
two support angles 12 disposed in alignment are connected by one support frame 3;
   and/or,
two support edges 11 disposed in alignment are connected by another support frame 3.

In an embodiment, every pair of aligned support angles 12 between two adjacent support platforms 1 is connected by one support frame 3, and/or every pair of aligned support edges 11 between two adjacent support platforms 1 is connected by one support frame 3. In this way, multiple support frames 3 provided may distribute pressure borne, thereby improving a load-bearing capacity.

In an embodiment, the support frame 3 between two symmetrically disposed support edges 11 is disposed at a midpoint of each support edge 11. In this way, the support frame 3 disposed at the midpoint of symmetrical edges may distribute a load evenly, thereby improving the support stability.

In the embodiment of the present disclosure, two support angles 12 that are aligned in the first direction Z are connected by one support frame 3, and/or two support edges 11 that are aligned in the first direction Z are connected by another support frame 3, so that edge areas that are aligned between two adjacent support platforms 1 may be supported in the first direction Z by the support frame 3, improving consistency between the support direction and the disposing direction of the support platform 1. Moreover, the symmetry between support points formed in two aligned support platforms 1 may be improved, thereby enhancing the support stability.

In some embodiments, the support platform 1 is a symmetrical platform with a center of symmetry or an axis of symmetry;
multiple support frames 3 are symmetrically distributed between two adjacent support platforms 1 relative to the center of symmetry or the axis of symmetry.

Exemplarily, the support platform 1 may be an equilateral ladder, in this case, the support platform 1 has the axis of symmetry. Or, the support platform 1 may be an equilateral triangle, in this case, the support platform 1 has the center of symmetry and the axis of symmetry.

In the embodiment of the present disclosure, multiple support frames 3 may be symmetrically distributed between two adjacent support platforms 1, thereby improving uniformity of the load on the multiple support frames 3, reducing safety risks caused by uneven load, and enhancing the support stability.

In some embodiments, the first connecting component 4 connected to the wind turbine 2 in the wind power generation apparatus is disposed at the center of symmetry.

In some embodiments, multiple support frames 3 are symmetrically distributed between two adjacent support platforms 1, with the first connecting component 4 connected to the wind turbine 2 in the wind power generation apparatus as the center of symmetry. Here, the support platform 1 may be or not be a symmetrical structure. The first connecting component 4 may be located at the center of symmetry of the support platform 1, or at any position other than the center of symmetry of the support platform 1. Here, there is no need to limit the structure of the support platform 1 and a position where the first connecting component 4 is disposed on the support platform 1. It is only necessary to enable multiple support frames 3 to be symmetrically distributed with the first connecting component 4 as the center of symmetry.

In the embodiment of the present disclosure, since the first connecting component 4 connecting the wind turbine 2 in the wind power generation apparatus is disposed at the center of symmetry, multiple support frames 3 are uniformly distributed around the first connecting component 4 with the position of the first connecting component 4 as the center of symmetry, thereby providing a stable support space for the first connecting component 4 and the wind turbine 2 connected to the first connecting component 4. In this way, the safety of the wind turbine 2 may be ensured.

In some embodiments, the support frame 3 has a first support end 31 and a second support end 32 along the first direction Z;
the first support end 31 is connected to one of two adjacent support platforms 1 through a second flange 28;
the second support end 32 is connected to the other of two adjacent support platforms 1 through a third flange 29.

Here, flange interfaces for connecting with the flange may be respectively reserved at the first support end 31 and the second support end 32, so as to quickly connect the flange interfaces with the flange connected to the support platform 1, thereby completing the connection between each support end of the support frame 3 and each support platform 1.

In the embodiments of the present disclosure, two support ends of the support frame 3 and the support platform 1 may be detachably connected through the flange, thereby facilitating disassembling and replacement of the support frame 3 disposed between two adjacent support platforms 1.

In some embodiments, the wind turbine 2 includes:
at least two blades 22 arranged along the first direction Z;
the second connecting component 23 connected between each blade 22 and the rotating shaft 21 of the wind turbine 2;
the third connecting component 24 connected between two adjacent blades 22.

In some embodiments, the third connecting component 24 connected between two adjacent blades 22 includes multiple connecting rods, which are spaced apart from each other. The connecting rod of the third connecting component 24 is disposed along a second direction X, and the second direction X is perpendicular to the first direction Z.

Exemplarily, the third connecting component 24 connected between two adjacent blades 22 includes a first connecting rod 241, a second connecting rod 242, and a third connecting rod 243, which are sequentially arranged at intervals between two adjacent blades 22. Exemplarily, the first connecting rod 241 may be an upper connecting rod, which is connected between top ends of two adjacent blades 22. The second connecting rod 242 may be a middle connecting rod, which is connected between midpoints of two adjacent blades 22. The third connecting rod 243 may be a lower connecting rod, which is connected between bottom ends of two adjacent blades 22. Here, two adjacent blades 22 may be stably connected through multiple connecting rods in the third connecting component 24.

In the embodiment of the present disclosure, a connection strength of an overall structure of the wind turbine 2 may be enhanced through the second connecting component 23 connected between each blade 22 and the rotating shaft 21 of the wind turbine 2, as well as the third connecting component 24 connected between two adjacent blades 22.

In some embodiments, the second connecting component 23 connected between each blade 22 and the rotating shaft 21 of the wind turbine 2 includes multiple connecting rods;
a same blade 22 is respectively connected with multiple connecting rods to form multiple connection points; and the multiple connection points are evenly distributed on the same blade 22.

In the embodiment of the present disclosure, multiple connection points formed by connecting multiple connecting rods of the second connecting component 23 with the same blade 22 are uniformly distributed on the same blade 22, so that loads may be uniformly transmitted between the blade 22 and the rotating shaft 21, improving a service life of the connecting rods and connection stability.

In some embodiments, a length of the blade 22 along the first direction Z is the same as a length of the rotating shaft 21 along the first direction Z, and the second connecting component 23 is disposed along a second direction X; and the second direction X is perpendicular to the first direction Z;
or,
the length of the blade 22 along the first direction Z and the length of the rotating shaft 21 along the first direction Z are different, and the second connecting component 23 is disposed along a third direction Y, and an angle between the third direction Y and the first direction Z is an acute angle or an obtuse angle.

In some embodiments, the second connecting component 23 connected between each blade 22 and the rotating shaft 21 of the wind turbine 2 includes a fourth connecting rod 231 and a fifth connecting rod 232; where, the fourth connecting rod 231 is disposed along the second direction X, and the second direction X is perpendicular to the first direction Z. The fifth connecting rod 232 is disposed along the third direction Y, and the angle between the third direction Y and the first direction Z is the acute angle or the obtuse angle. In this way, the support force in different directions may be provided by arranging the fourth connecting rod and the fifth connecting rod with intersecting directions, thereby improving the connection stability.

In the embodiment of the present disclosure, on the one hand, in the case that the length of the blade 22 along the first direction Z is the same as the length of the rotating shaft 21 along the first direction Z, the blade 22 and the rotating shaft 21 may be stably connected in a transverse manner through the second connecting component 23. On the other hand, in the case that the length of the blade 22 along the first direction Z is different from the length of the rotating shaft 21 along the first direction Z, the blade 22 and the rotating shaft 21 may be stably connected in a diagonal support manner. In this way, it is possible to adapt to the length of the blade 22 in the first direction Z and the length of the rotating shaft 21 in the first direction Z, and flexibly set an arrangement direction of the second connecting component 23 connected between the blade 22 and the rotating shaft 21, thereby improving flexibility of connecting the blade 22 and the rotating shaft 21.

In some embodiments, multiple wind turbines 2 of the wind power generation apparatus include a first wind turbine located at a first height and a second wind turbine located at a second height and the second height is greater than the first height;
the number of blades of the first wind turbine is greater than that of blades of the second wind turbine.

It should be noted that under the same environment, the height of the wind turbine 2 is positively correlated with a wind speed at that height.

In some embodiments, two adjacent support platforms include a first support platform and a second support platform stacked above the first support platform. The first wind turbine may be a wind turbine connected to the first support platform, and the second wind turbine may be a wind turbine connected to the second support platform.

In some embodiments, the first wind turbine may be a wind turbine connected to the first support platform 1. Other wind turbines in the wind power generation apparatus, except for the first wind turbine, may have the same number of blades.

In the embodiments of the present disclosure, in the case that the wind speed at the first height is lower than the wind speed at the second height, the number of blades 22 of the first wind turbine 2 located at the first height may be greater than the number of blades 22 of the second wind turbine 2 located at the second height, thereby reducing a difference between power generation capacity of the first wind turbine 2 and power generation capacity of the second wind turbine 2. In this way, a consistency of the power generation capacity of wind turbines 2 at various heights may be improved.

In order to better understand the embodiments of the present disclosure, referring to FIG. 5, FIG. 5 exemplarily illustrates a structure of the wind turbine 2. The wind turbine 2 includes:
the rotating shaft 21 disposed along the first direction Z;
at least two blades 22 disposed along the first direction Z;
the second connecting component 23 connected between each blade 22 and the rotating shaft 21;
where the second connecting component 23 includes: at least two fourth connecting rods 231 disposed along the second direction X, the second direction X being perpendicular to the first direction Z; the fifth connecting rod 232 disposed along the third direction Y, and the angle between the third direction Y and the first direction Z is the acute angle or the obtuse angle;
the third connecting component 24 connected between two adjacent blades;
where the third connecting component 24 includes: the first connecting rod 241 connected between the top ends of two adjacent blades 22; the second connecting rod 242 connected between the midpoints of two adjacent blades 22; the third connecting rod 243 connected between the bottom ends of two adjacent blades 22;
the power generation module 26 connected to the rotating shaft 21 and configured to generate power under a drive of the rotating shaft 21;
the electromagnetic braking module 25 connected to the rotating shaft 21 and configured to provide for the rotating shaft a frictional force opposite to the rotational direction of the rotating shaft when the rotational speed of the rotating shaft 21 is greater than a speed threshold;
the first flange 27 having a first flange interface and a second flange interface, where the first flange interface is connected to the electromagnetic brake module 25, and the second flange interface is used to connect with the support platform 1.

Here, the electromagnetic braking module 25 may be disposed between the power generation module 26 and the first flange 27.

Here, a stable connection between the rotating shaft 21 and the blade 22 may be formed through at least two sets of connecting rods in the second connecting component 23 and three sets of connecting rods in the third connecting component 24. Furthermore, the second connecting component 23 may be connected between the rotating shaft 21 and the blade 22 through a first screw. The third connecting component 24 may be connected between two adjacent blades by a second screw.

In some embodiments, each wind turbine may be separately connected to the control module. The control module may be any control module in the present disclosure. Moreover, the wind power generation apparatus may include a rectifier module and an inverter module. The rectifier module is connected between the wind turbine and the inverter module, and the inverter module is connected between the rectifier module and the load. The rectifier module is used to convert an alternating current output by the wind turbine into a direct current, and the inverter module is used to convert the direct current into alternating current that may be used by the load, and to combine currents output by each wind turbine to provide the combined current to the load.

After considering the specification and practicing the utility model disclosed herein, those skilled in the art will be readily conceive of other implementation solutions of the present disclosure. The present disclosure is intended to cover any variations, uses, or adaptive changes of the present disclosure that follow the general principles of the present disclosure and include common knowledge or customary technical means in the art that are not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes may be made without departing from its scope. The scope of the present disclosure is limited only by the appended claims.

## Claims

1. A wind power generation apparatus, comprising:
at least two support platforms (1), stacked along a first direction (Z);
a wind turbine (2) and a support frame (3), provided between two adjacent support platforms (1);
wherein the support frame (3) is connected between the two adjacent support platforms (1);
the wind turbine (2) is detachably connected to one of the two adjacent support platforms (1), and spaced apart from the support frame (3) and the other of the two adjacent support platforms (1).

2. The wind power generation apparatus according to claim 1, wherein the wind power generation apparatus comprises:
a first connecting component (4), connected between one of the two adjacent support platforms (1) and the wind turbine (2);
wherein, the wind turbine (2) is detachably connected to the first connecting component (4), and/or the first connecting component (4) is detachably connected to one of the two adjacent support platforms (1).

3. The wind power generation apparatus according to claim 2, wherein
the first connecting component (4) is arranged along the first direction (Z) and aligned with a rotating shaft (21) of the wind turbine (2).

4. The wind power generation apparatus according to claim 2, wherein the first connecting component (4) comprises a first connecting end (41) and a second connecting end (42) that are arranged oppositely;
the first connecting end (41) is connected to one of the two adjacent support platforms (1);
the second connecting end (42) is connected to an electromagnetic braking module (25) at a bottom of the wind turbine (2) through a first flange (27).

5. The wind power generation apparatus according to any one of claims 1 to 4, wherein there are multiple support frames (3); the multiple support frames (3) are spaced apart from each other and each connected to edge positions of the two adjacent support platforms (1).

6. The wind power generation apparatus according to claim 5, wherein
each support platform (1) has multiple support edges (11) and a support angle (12) formed by two adjacent support edges (11);
the two adjacent support platforms (2) have two support edges (11) aligned along the first direction (Z), and two support angles (12) aligned along the first direction (Z);
the two support angles (12) arranged in alignment are connected by one support frame (3);
and/or,
the two support edges (11) arranged in alignment are connected by another support frame (3).

7. The wind power generation apparatus according to claim 5, wherein the support platform (1) is a symmetrical platform with a center of symmetry or an axis of symmetry;
the multiple support frames (3) are symmetrically distributed between the two adjacent support platforms (1) relative to the center of symmetry or the axis of symmetry.

8. The wind power generation apparatus according to claim 7, wherein the first connecting component (4) connecting the wind turbine (2) in the wind power generation apparatus is arranged at the center of symmetry.

9. The wind power generation apparatus according to any one of claims 1 to 4, wherein
the support frame (3) has a first support end (31) and a second support end (32) along the first direction (Z);
the first support end (31) is connected to one of the two adjacent support platforms (1) through a second flange (28);
the second support end (32) is connected to the other of the two adjacent support platforms (1) through a third flange (29).

10. The wind power generation apparatus according to any one of claims 1 to 4, wherein the wind turbine (2) comprises:
at least two blades (22) arranged along the first direction (Z);
a second connecting component (23), connected between each blade and a rotating shaft (21) of the wind turbine (2);
a third connecting component (24), connected between two adjacent blades (22).

11. The wind power generation apparatus according to claim 10, wherein the second connecting component (23) connected between the each blade (22) and the rotating shaft (21) of the wind turbine (2) comprises: multiple connecting rods;
a same blade (22) is respectively connected with the multiple connecting rods to form multiple connection points, and the multiple connection points are evenly distributed on the same blade (22).

12. The wind power generation apparatus according to claim 10, wherein
a length of the blade (22) along the first direction (Z) is the same as a length of the rotating shaft (21) along the first direction (Z), and the second connecting component (23) is arranged along a second direction (X); the second direction (X) is perpendicular to the first direction (Z);
or,
a length of the blade (22) along the first direction (Z) and a length of the rotating shaft (21) along the first direction (Z) are different, and the second connecting component (23) is arranged along a third direction (Y), an angle between the third direction (Y) and the first direction (Z) is an acute angle or an obtuse angle.

13. The wind power generation apparatus according to claim 10, wherein
multiple wind turbines (2) of the wind power generation apparatus comprise a first wind turbine located at a first height and a second wind turbine located at a second height, the second height being greater than the first height;
a number of blades (22) of the first wind turbine is greater than that of blades (22) of the second wind turbine.

14. The wind power generation apparatus according to claim 10, wherein the third connecting component (24) connected between two adjacent blades (22) comprises multiple connecting rods, which are spaced apart from each other.

15. The wind power generation apparatus according to claim 10 or 14, wherein the third connecting component (24) connected between two adjacent blades (22) comprises a first connecting rod (241), a second connecting rod (242), and a third connecting rod (243), which are sequentially arranged at intervals between two adjacent blades (22).
